# EUROPEAN PATENT SPECIFICATION

(11) **EP 3 895 909 B1**
(45) Date of publication and mention of the grant of the patent: **06.03.2024**
(21) Application number: 19897318.2
(22) Date of filing: 13.12.2019
(51) Int. Cl.: B60C 9/22, B60C 15/00, B60C 15/06, B60C 11/00, B60C 9/20

(54) **TIRE**
REIFEN
PNEU

(30) Priority: 14.12.2018 JP 2018234252
(43) Date of publication of application: 20.10.2021
(73) Proprietor: BRIDGESTONE CORPORATION, Chuo-ku Tokyo 104-8340 (JP)
(72) Inventor: TAKADA, Hiroshi, Tokyo 104-8340 (JP); HONDA, Shingo, Tokyo 104-8340 (JP)
(74) Representative: Marks & Clerk LLP
(86) International application number: PCT/JP2019/048999
(87) International publication number: WO 2020/122239

(56) References cited:
- JP-A- H09 240 215
- JP-A- 2000 190 706
- JP-A- 2012 171 377
- JP-A- 2014 226 945
- JP-A- 2017 193 222
- JP-A- 2017 218 042
- JP-A- 2018 103 965
- JP-A- 2018 118 570

## Description

### [Technical Field]

The present invention relates to a tire suitably mounted on a solar car or the like, requiring low rolling resistance and light weight.

### [Background Art]

A pneumatic tire (hereinafter abbreviated as tire), which can be suitably used for a solar car which is a vehicle driven by an electric motor utilizing solar cells as a power source, is known (see Patent Literature 1.).

The tire disclosed in the Patent Literature 1 comprises a crossing belt layer having two or less belts and a spiral belt (circumferential belt) having cords wound along the on the outside of the tire radial direction of the crossing belt layer.

With such a configuration, both the reduction of rolling resistance and the reduction of weight are achieved.

JP2000190706 discloses a carcass layer formed as a radial structure with limited two sheets of plies comprising a first carcass ply and a second carcass ply to reduce the weight of a tire while maintaining the shape of the tire. A belt layer is structured with two sheets of belt plies comprising a first belt ply and a second ply made of cords having elastic modulus of 600 kg/mm2 or more. The first belt ply is a so-called spiral belt formed by winding cords in spiral. The maximum tire width is set narrow in the range from 0.10 to 0.30 times of the rim diameter to reduce running resistance.

JP2017218042 discloses a pneumatic tire that comprises at least three circumferential main grooves, at least four land portions including shoulder land portions, and shoulder lateral grooves arranged in the shoulder land portions. Groove depths of the circumferential main grooves are set to be 6.3 mm or less. In the shoulder lateral groove, a groove depth of the deepest part is 75-90% of the groove depths, and a groove depth at a ground-contact end of a tread is 63-85% of the groove depths. A land ratio of shoulder areas is smaller than a land ratio of a crown area. In tread rubber, a ratio tanδ0/tanδ30 of tanδ0 at a temperature of 0°C to tanδ30 at a temperature of 30°C is 3.75 or more.

JP2017193222 discloses a pneumatic tire that comprises multiple main grooves extending in a tire circumferential direction in a tread part. Multiple rows of land parts are partitioned by the multiple main grooves. The main groove comprises a pair of outermost main grooves arranged on an outermost side in a tire width direction. The land part comprises center land parts arranged on an inner side of the outermost main groove in the tire width direction to form rib-like shapes. The center land part comprises multiple sipes extending in the tire width direction. At least one hole part is provided in a part of each of the sipes in a longitudinal direction, extends in a tire radial direction, and has a width wider than that of the sipe. A cavity part is provided in a bottom part of each of the sipes, extends in the tire width direction, and has a width wider than that of the sipe. The cavity part is connected with the hole part.

JP2018118570 discloses a pneumatic tire which includes: a pair of bead parts embedded with an annular bead core; and a carcass provided between the pair of bead parts. The pneumatic tire has a filler-less structure where the carcass is folded back without laying a bead filler around the bead core. A tire thickness measured
in a direction vertical to a carcass line is 1.2 times or less as thick as a width of the bead core on a rim line and 4.2 mm or less in a tire maximum width position.

JP2018103965 discloses a pneumatic tire comprising: a pair of bead portions in which an annular bead core is embedded; a carcass ply which is provided between the bead portions, and of which an end part is wound up from an inner side toward an outer side in a tire width direction without location of a bead filler around the bead core; and a rim strip rubber which is provided on an outer side of the carcass ply in the bead portion, and which can contact a rim flange. In this tire, a low hardness rubber of a triangular cross section having a bottom face which contacts an outer peripheral surface of the bead core, and both side faces, which extend from both end parts of the bottom face to a tire radial direction outer side is located on an outer peripheral side of the bead core, and a hardness of a rubber which constitutes the low hardness rubber is lower than a hardness of a rubber which constitutes the rim strip rubber.

JP2014226945 discloses a pneumatic tire which includes a tread reinforcement layer arranged in the tire radial direction outside of a carcass and inside of a tread part. The tread reinforcement layer is constituted of a reinforcement ply in which an arrangement body of reinforcement cords is covered with topping rubber. The reinforcement ply includes: a first ply which exists in the most inside in the tire radial direction and has an angle of the reinforcement cords of 50 to 60°; a second ply which exists outside of the first ply and has an angle of the reinforcement cords of 20 to 30°; and a third ply which exists in the tire radial direction outside of the second ply and has an angle of the reinforcement cords of 20 to 30°. The reinforcement cords and the reinforcement cords have a same direction, and the reinforcement
cords and the reinforcement cords have opposite directions to each other.

JP2012171377 discloses pneumatic tire pairs that have a carcass constituted of at least one ply extending in a toroidal shape, an inclined belt layer of one layer of slantingly extending the cord at an inclination of 15°-75° to the tire equatorial surface, and a circumferential directional belt layer arranged by spirally winding a spiral cord at an inclination of ≤5° to the tire equatorial surface, and are installed as one set in right-left wheels of a vehicle. The pneumatic tire pairs and the installation method of them are characterized by making the extending direction to the tire equatorial surface of the cord for constituting the inclined belt layer, different between a right wheel tire and a left wheel tire.

### [Citation List]

### [Patent Literature]

[PTL 1] Japanese Unexamined Patent Application Publication No. 2000 -190706

### [Summary of Invention]

According to tire as described above, it is possible to achieve both a reduction in rolling resistance and a reduction in weight, but further improvement has been required.

In addition, in order to reduce the weight, if simplification of an internal structure such as a crossing belt layer is adopted, it is likely to cause a puncture, thereby reducing durability.

Accordingly, an object of the present invention is to provide a tire having improved durability against puncture while reducing rolling resistance and weight.

The present invention is represented by a tire as set out in the appended set of claims.

### [Brief Description of Drawings]

FIG. 1 is a cross-sectional view of a pneumatic tire 10 along tire width direction and tire radial direction.
FIG. 2 is a top view (tread surface view) of a part of a carcass 40 and a belt layer 50.

### [Description of Embodiments]

Embodiments will be described below with reference to the drawings. The same functions and configurations are denoted by the same or similar reference numerals, and description thereof will be omitted as appropriate.

### (1)Overall structure of tire

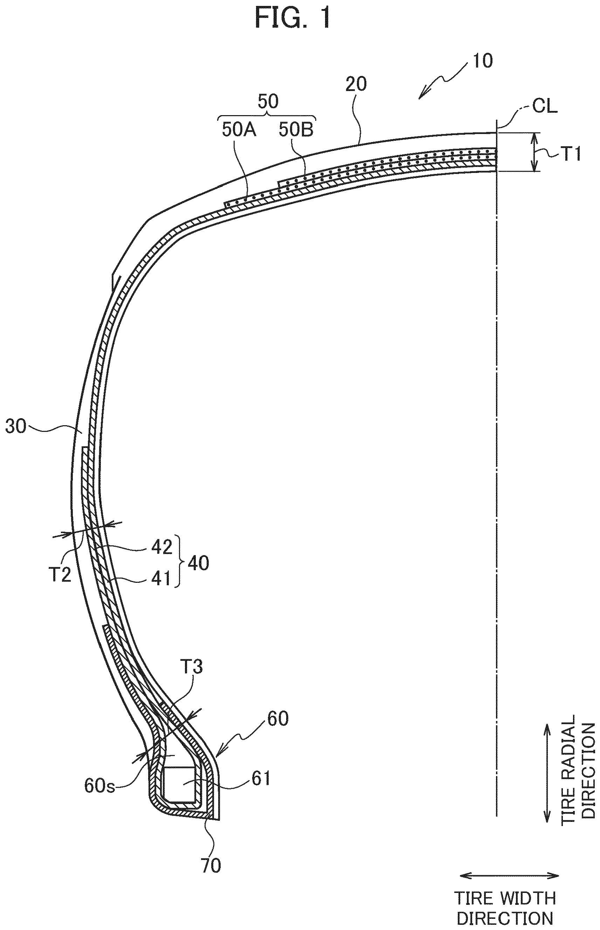

FIG. 1 is a partial sectional view of the pneumatic tire 10 according to the present embodiment. Specifically, FIG. 1 is a cross-sectional view of the pneumatic tire 10 taken along the tire width direction and the tire radial direction. In FIG. 1, only one side of the tire equatorial line CL is shown with respect to the pneumatic tire 10. In FIG. 1, sectional hatching is partially omitted.

The pneumatic tire 10 is used for a light vehicle such as a solar car which is a vehicle driven by an electric motor utilizing a solar cell as a power source. In particular, it can be suitably used for a racing solar car.

In this embodiment, the pneumatic tire 10 has a diameter size of 16 inches and a tread width of 100 mm or less (For example, 75, 95 size). The specified internal pressure (air pressure) is about 500 to 600 kPa.

As shown in FIG. 1, the pneumatic tire 10 includes a tread portion 20, a tire side portion 30, a carcass 40, a belt layer 50, a bead portion 60, and a chafer 70.

The tread portion 20 is a portion in contact with a road surface. For the tread portion 20, rubber of an appropriate composition is used and a tread pattern (unillustrated) is formed based on characteristics and travelling conditions of a light vehicle such as a solar car to which the pneumatic tire 10 is mounted.

Solar cars (especially a racing solar car) are much lighter than standard passenger cars and mainly travel straight.

The thickness of rubber forming the tread portion 20 is thinner than that of a standard passenger car tire. In the present embodiment, a tread thickness T1 of a rubber forming the tread portion 20 along the tire radial direction at a position of the tire equatorial line CL is 5 mm or less. The tread thickness T1 is preferably 1.5 mm to 3.5 mm.

The distortion energy loss (tan δ) of the rubber forming the tread portion 20 at 30 ° C is preferably 0.08 to 0.2.

The tire side portion 30 is continuous to the tread portion 20 and is positioned inside in the tire radial direction of tread portion 20. The tire side portion 30 is an area from the outer edge of the tire width direction of the tread portion 20 to the upper edge of the bead portion 60. The tire side portion 30 is sometimes referred to as a sidewall.

In the present embodiment, the thickness of the rubber forming the tire side portion 30 is also thinner than that of the standard passenger car tire. Specifically, the maximum thickness T2 of the rubber forming the tire side portion 30 is 3 mm or less.

Note that the maximum thickness T2 means a thickness along a straight line that is substantially perpendicular to the inner surface of the tire side portion 30 in a sectional view of the pneumatic tire 10 as shown in FIG. 1.

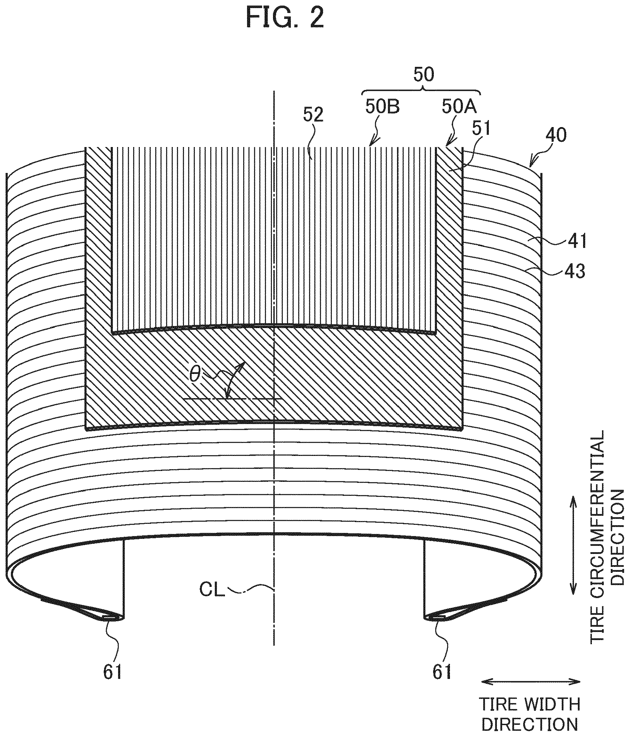

The carcass 40 forms the skeleton of the pneumatic tire 10. The carcass 40 is a radial structure having a carcass cord 43 (not shown in FIG. 1, see FIG. 2) radially disposed along a tire radial direction. The carcass 40 is formed of only 1 sheet (one layer).

However, the carcass 40 is not limited to a radial structure, and a bias structure in which a carcass cord is arranged so as to cross each other in the tire radial direction may be used.

The carcass 40 has a body portion 41 and a folded portion 42. The body portion 41 is provided over the tread portion 20, the tire side portion 30 and the bead portion 60, and is a portion until it is folded at a bead core 61.

The folding back portion 42 is a part continued to the body portion 41 and folded back to the outside of the tire width direction via the bead core 61.

The belt layer 50 is disposed inside the tire radial direction of the tread portion 20. The belt layer 50 is provided in an annular shape along the tire circumferential direction at outside the tire radial direction of the carcass 40.

In the present embodiment, the belt layer 50 includes an inclined belt 50 A and a circumferential belt 50 B.

The inclined belt 50 A is provided adjacent to the body portion 41 of the carcass 40 and outside the tire radial direction of the body portion 41. The inclined belt 50 A is similar to a crossing belt commonly provided in a belt layer having a radial structure (radial tire), but only one inclined belt 50 A is provided. That is, the inclined belt 50 A is not a crossing belt where the cords cross, but the cords are arranged so as to be inclined in one direction with respect to the tire width direction (alternatively, may be based on the tire radial direction) as will be described later.

The circumferential belt 50 B is provided adjacent to the inclined belt 50 A and outside the tire radial direction of the inclined belt 50 A. The circumferential belt 50 B is a kind of spiral belt in which a cord is wound along the tire circumferential direction.

The bead portion 60 is continuous to the tire side portion 30 and is positioned inside in the tire radial direction of tire side portion 30. The bead portion 60 has an annular shape and is engaged with a rim wheel (unillustrated).

The bead portion 60 has the bead core 61. The bead core 61 is an annular (ring) member extending to the tire circumferential direction and is formed of a metal (steel) cord.

The bead portion 60 has a bead filler-less structure in which placement of a bead filler is omitted between the body portion 41 and the folded portion 42 of the carcass 40. That is, in the standard passenger car tire or the like, a bead filler as a rigid member is widely provided in the wedge-shaped space 60 s outside the tire radial direction than the bead core 61 formed between the body portion 41 and the folded portion 42 of the carcass 40 for filling the space 60 s, but such a bead filler is not provided in the pneumatic tire 10.

The space 60 s may be simply a void or may be filled with rubber that flows out from the surroundings upon vulcanization of the raw pneumatic tire 10.

In the present embodiment, the thickness of the rubber forming the bead portion 60 is also thinner than that of the standard passenger car tire. Specifically, the maximum thickness T3 of the rubber forming the bead portion 60 is 13 mm or less.

Note that, similarly to the maximum thickness T2, the maximum thickness T3 means a thickness along a straight line substantially perpendicular to the inner surface of the bead portion 60 in a sectional view of the pneumatic tire 10 as shown in FIG. 1.

The chafer 70 is provided on the outer peripheral surface of the bead portion 60. The chafer 70 prevents the bead portion 60 from being abraded by the rim wheel. The chafer 70 is formed of a reinforcing cord of an organic fiber or the like.

### (2)Specific composition of belt layer

FIG. 2 is a top view (tread surface view) showing a part of the carcass 40 and the belt layer 50. As shown in FIG. 2, the carcass 40 has a plurality of carcass cords 43 disposed along a radial direction.

The carcass cord 43 is covered with a rubber member. In this embodiment, the carcass cord 43 is formed by twisting two polyester fibers. The fineness of the carcass cord 43 is preferably 2500 dtex or less.

As described above, the belt layer 50 includes the inclined belt 50 A and the circumferential belt 50 B. That is, the belt layer 50 includes one inclined belt and one circumferential belt only.

The inclined belt 50 A has inclined cords 51 inclined to the tire width direction. Specifically, the inclined belt 50 A has a plurality of inclined cords 51 inclined with respect to the tire width direction (alternatively, based on tire radial direction).

The inclined cord 51 is covered with a rubber member, and the inclined cord 51 is arranged at approximately equal intervals with the adjacent inclined cord 51. In this embodiment, the inclined cord 51 is formed of nylon fibers. That is, the inclined cord 51 can be formed of a predetermined organic fiber. The fineness of the inclined cord 51 is preferably 1500 dtex or less.

The inclination angle θ of the inclination cord 51 with respect to the tire width direction is 35 degrees or more and 55 degrees or less. The inclination angle θ is preferably 40 degrees or more and 50 degrees or less.

The circumferential belt 50 B is provided outside the tire radial direction of the inclined belt 50 A. The circumferential belt 50 B has a circumferential cord 52 wound along the tire circumferential direction.

The circumferential cord 52 is wound a plurality of times along the tire circumferential direction from one end side to the other end side in the tire width direction. The circumferential cord 52 is also covered with a rubber member.

In this embodiment, the circumferential cord 52 is formed of aramid fibers. That is, the circumferential direction cord 52 can be formed of a predetermined organic fiber. The fineness of the circumferential direction cord 52 is preferably 2500 dtex or less.

The initial elastic modulus of the circumferential belt 50 B is preferably 1000 cN/tex or more. The initial elastic modulus means the elastic modulus of the pneumatic tire 10 when it is new.

### (3)Function and effects

Next, the function and effects of the pneumatic tire 10 will be described. if the pneumatic tire 10 having the above-described structure is manufactured, and its durability against rolling resistance and puncture can be evaluated.

The evaluation conditions may be as follows.
- Tire Size : 95/80 R 16
- Applicable Rim Size: 3 J

In the rolling resistance test, the rolling resistance value is evaluated based on the travelling distance when the vehicle is coasting from a speed of 120 km/h with internal pressure set at 500 kPa and 600 kPa. The slip angle and camber angle of the vehicle are set to 0 degrees, and a load of 5 kN is applied to the tire.

In the puncture resistance test, the internal pressure is set at 500 kPa, and the energy value generated by pressing the sharp conical protrusion against the tread surface of the tire is evaluated.

As a result, it can be confirmed that the pneumatic tire 10 has low rolling resistance equivalent to, or better than, that of a conventional pneumatic tire of the same type, and that it has high puncture resistance.

As described above, the pneumatic tire 10 is provided with one inclined belt 50 A having the inclined cords 51 inclined with respect to the tire width direction and one circumferential belt 50 B having the circumferential cord 52 wound along the tire circumferential direction. The inclined cords 51 and the circumferential cord 52 are formed of organic fibers.

Furthermore, the tread thickness T1 is 5 mm or less.

By using the tread portion 20 having the simplified thin belt layer 50 structure and an organic fiber cord, it is possible to achieve both a reduction in rolling resistance and a reduction in weight.

Further, by interposing only one inclined belt 50 A having the inclined cords 51 between the carcass 40 and the circumferential belt 50 B, the durability against a puncture is remarkably improved. Specifically, the propagation of a crack generated on the surface of the tread portion 20 by stepping on a foreign substance or the like is prevented by the inclined belt 50 A and does not reach the carcass 40. Thus, an air leak state in which air filled in the pneumatic tire 10 assembled to the rim wheel leaks can be avoided. Further, since there is only one inclined belt 50, the weight increase can be suppressed.

That is, according to the pneumatic tire 10, durability against puncture is improved while reducing rolling resistance and weight.

Since the thickness (gauge) of the tread portion 20 is thin, the growth (diameter growth) of the pneumatic tire 10 in the radial direction during traveling is suppressed. On the other hand, when the diameter growth is large, the ground contact area of the pneumatic tire 10 becomes small, and the grounding pressure becomes high. Therefore, when foreign substance or the like on the road surface is stepped on, the damage is large. In addition, the increase of the ground contacting pressure is not preferable from the viewpoint of wear resistance.

That is, the thin tread thickness T1 contributes to the improvement of durability including puncture.

The pneumatic tire 10 is a tire designed for use in light vehicles such as solar cars, and requires extremely low rolling resistance.

In order to minimize the rolling resistance of tire, it is important to minimize the distortion energy loss generated from the rubber member. It is necessary to minimize the amount of the rubber member used and to make the gauge thinner.

Further, when such a tire is used, the rolling resistance can be further reduced by using it at the highest internal pressure possible. For this reason, in tire which specializes in suppressing rolling resistance, a structure in which one layer of the carcass is provided with one layer of a spiral belt (reinforcement layer) has been widely used.

On the other hand, when the tire is used under high internal pressure, a large tension is applied to the rubber layer on the surface of the tire such as a tread. Therefore, when the surface of the tire is slightly damaged due to unevenness on the road surface, distortion is concentrated starting from the crack, and the crack easily develops in the rubber.

In this case, if the rubber thickness (rubber gauge) is thick, the tension tends to be released, and the progress of the crack in the rubber is relaxed . However, when the rubber gauge is thinned, a crack penetrates through the rubber layer and reaches the inner surface of the tire, and air leakage (puncture) occurs.

According to the pneumatic tire 10, the single inclined belt 50 A effectively suppresses the growth of such cracks, and enhances the durability against puncture with little sacrifice in other performance.

Further, if the tread thickness T1 is 1.5 mm or more and 3.5 mm or less, the rolling resistance can be further reduced while ensuring the durability against puncture. The maximum thickness T2 of the tire side portion 30 is 3 mm or less, and the maximum thickness T3 of the bead portion 60 is 13 mm or less. This can contribute to further reduction of rolling resistance.

In this embodiment, the inclination angle θ of the inclined cord 51 is 35 degrees or more and 55 degrees or less, preferably 40 degrees or more and 50 degrees or less. This can effectively prevent crack growth in the belt layer 50, specifically in tire width direction and tire circumferential direction. Thus, the durability against the puncture can be further improved.

In this embodiment, a bead-filler-less structure is adopted. Thus, the pneumatic tire 10 can be further reduced in weight. In consideration of the characteristics of the vehicle to which the pneumatic tire 10 is mounted, the required performance can be exhibited without providing a bead filler which is a rigid member of the bead portion 60.

In the present embodiment, the tan δ of the rubber forming the tread portion 20 at 30 ° C is 0.08 to 0.2. Thus, the rolling resistance can be further reduced.

### (4)Other Embodiments

Although the contents of the present invention have been described above in accordance with the embodiments, it will be obvious to those skilled in the art that the present invention is not limited to these descriptions and that various modifications and improvements, within the scope of the appended claims, are possible.

For example, in the above embodiment, the pneumatic tire 10 has been described as being suitably usable for a solar car, but the pneumatic tire 10 may be mounted on a light vehicle other than a solar car, for example, a two-wheel automobile, a three-wheel automobile, a bicycle or the like mainly for high-speed traveling.

While embodiments of the invention have been described as above, it should not be understood that the statements and drawings which form part of this disclosure are intended to limit the invention (the scope of which is defined by the appended claims). Various alternative embodiments, examples and operating techniques, within the scope of the appended claims, will become apparent to those skilled in the art from this disclosure.

### [Reference Signs List]

10 pneumatic tire
20 tread portion
30 tire side portion
40 carcass
41 body portion
42 folded portion
43 carcass cord
50 belt layer
50 A inclined belt
50 B circumferential belt
51 inclined Cord
52 circumferential cord
60 bead portion
60 s space
61 bead core
70 chafer

## Claims

1. A tire (10) comprising:
a tread portion (20) in contact with a road surface;
a tire side portion (30) continuous to the tread portion (20) and positioned inside in a tire radial direction of the tread portion (20);
a bead portion (60) continuous to the tire side portion (30) and positioned inside in the tire radial direction of the tire side portion (30); and
a belt layer (50) disposed inside the tire radial direction of the tread portion (20), and
a carcass (40) forming the skeleton of the tire, wherein
the belt layer (50) comprises:
a single inclined belt (50A) having an inclined cord (51) inclined with respect to the tire width direction; and
a circumferential belt (50B) disposed outside the tire radial direction of the inclined belt (50A) and having a circumferential cord (52) wound along the tire circumferential direction, wherein
the inclined cord (51) and the circumferential cord (52) are formed of a predetermined organic fiber, and
a tread thickness of a rubber forming the tread portion (20) along a tire radial direction at a position of a tire equatorial line is 5 mm or less, wherein
the carcass (40) comprises:
a body portion (41); and
a folded portion (42) continuous to the body portion (41) and folded back to outside in the tire width direction via a bead core (61),
the bead portion (60) has a bead filler-less structure in which disposition of a bead filler between the body portion (41) and the folded portion (42) is omitted.

2. The tire (10) according to claim 1, wherein the tread thickness is 1.5 mm or more and 3.5 mm or less.

3. The tire (10) according to claim 1 or 2, wherein an inclination angle of the inclined cord (51) with respect to the tire width direction is 35 degrees or more and 55 degrees or less, preferably 40 degrees or more and 50 degrees or less.

4. The tire (10) according to any one of claims 1 to 3, wherein a maximum thickness of the rubber constituting the tire side portion (30) is 3 mm or less, and
a maximum thickness of the rubber constituting the bead portion (60) is 13 mm or less.

5. The tire (10) according to any preceding claim, wherein tan δ at 30 ° C of the rubber forming the tread portion (20) is 0.08 or more and 0.2 or less.

## Patentansprüche

1. Reifen (10), Folgendes umfassend:
einen Laufflächenabschnitt (20), der mit einer Straßenoberfläche in Kontakt steht;
einen Reifenseitenabschnitt (30), der sich an den Laufflächenabschnitt (20) anschließt und in radialer Richtung des Reifens innerhalb des Laufflächenabschnitts (20) angeordnet ist;
einen Wulstabschnitt (60), der sich an den Reifenseitenabschnitt (30) anschließt und in der radialen Richtung des Reifens innerhalb des Reifenseitenabschnitts (30) angeordnet ist; und
eine Gürtelschicht (50), die innerhalb der radialen Richtung des Reifens des Laufflächenabschnitts (20) angeordnet ist, und
eine Karkasse (40), die das Skelett des Reifens bildet, wobei die Gürtelschicht (50) Folgendes umfasst:
einen einzelnen schrägen Gürtel (50A) mit einem geneigten Kord (51), der in Bezug auf die Richtung der Reifenbreite geneigt ist; und
einen Umfangsgürtel (50B), der außerhalb der radialen Reifenrichtung des geneigten Gürtels (50A) angeordnet ist und einen Umfangskord (52) aufweist, der entlang der Reifenumfangsrichtung gewickelt ist, wobei
der geneigte Kord (51) und der Umfangskord (52) aus einer vorbestimmten organischen Faser gebildet sind, und
eine Laufflächendicke eines Gummis, der den Laufflächenabschnitt (20) entlang einer radialen Richtung des Reifens an einer Position einer Äquatoriallinie des Reifens bildet, 5 mm oder weniger beträgt, wobei
die Karkasse (40) Folgendes umfasst:
einen Körperabschnitt (41); und
einen gefalteten Abschnitt (42), der sich an den Körperabschnitt (41) anschließt und über einen Wulstkern (61) in Richtung der Reifenbreite nach außen zurückgefaltet ist,
der Wulstabschnitt (60) eine wulstfüllerlose Struktur aufweist, bei der die Anordnung eines Wulstfüllers zwischen dem Körperabschnitt (41) und dem gefalteten Abschnitt (42) ausgelassen wird.

2. Reifen (10) nach Anspruch 1, wobei die Laufflächendicke 1,5 mm oder mehr und 3,5 mm oder weniger beträgt.

3. Reifen (10) nach Anspruch 1 oder 2, wobei ein Neigungswinkel des geneigten Kords (51) in Bezug auf die Richtung der Reifenbreite 35 Grad oder mehr und 55 Grad oder weniger, vorzugsweise 40 Grad oder mehr und 50 Grad oder weniger beträgt.

4. Reifen (10) nach einem der Ansprüche 1 bis 3, wobei eine maximale Dicke des den Reifenseitenabschnitt (30) bildenden Gummis 3 mm oder weniger beträgt, und
eine maximale Dicke des Gummis, aus dem der Wulstteil (60) besteht, 13 mm oder weniger beträgt.

5. Reifen (10) nach einem der vorhergehenden Ansprüche, wobei tan δ bei 30 °C des den Laufflächenabschnitt (20) bildenden Gummis 0,08 oder mehr und 0,2 oder weniger beträgt.

## Revendications

1. Bandage pneumatique (10) comprenant :
une partie de bande de roulement (20) en contact avec une surface routière ;
une partie latérale de bandage pneumatique (30) continue avec la partie de bande de roulement (20) et positionnée à l'intérieur dans une direction radiale du bandage pneumatique de la partie de bande de roulement (20) ;
une partie de talon (60) continue avec la partie latérale de bandage pneumatique (30) et positionnée à l'intérieur dans la direction radiale du bandage pneumatique de la partie latérale de bandage pneumatique (30) ; et
une couche de ceinture (50) disposée à l'intérieur de la direction radiale du bandage pneumatique de la partie de bande de roulement (20), et
une carcasse (40) formant le squelette du bandage pneumatique, la couche de ceinture (50) comprenant :
une seule ceinture inclinée (50A) ayant un cordon incliné (51) incliné par rapport à la direction de la largeur du bandage pneumatique ; et
une ceinture circonférentielle (50B) disposée à l'extérieur de la direction radiale du bandage pneumatique de la ceinture inclinée (50A) et comportant un cordon circonférentiel (52) enroulé le long de la direction circonférentielle du bandage pneumatique, dans lequel
le cordon incliné (51) et le cordon circonférentiel (52) sont formés d'une fibre organique prédéterminée, et
une épaisseur de bande de roulement d'un caoutchouc formant la partie de bande de roulement (20) le long d'une direction radiale du bandage pneumatique en une position d'une ligne équatoriale de bandage pneumatique est de 5 mm ou moins, dans lequel
la carcasse (40) comprend :
une partie de corps (41) ; et
une partie pliée (42) continue avec la partie de corps (41) et repliée vers l'extérieur dans la direction de la largeur du bandage pneumatique par une âme de talon (61),
la partie de talon (60) a une structure sans bourrelet dans laquelle la disposition d'un bourrelet entre la partie de corps (41) et la partie pliée (42) est omise.

2. Bandage pneumatique (10) selon la revendication 1, dans lequel l'épaisseur de la bande de roulement est de 1,5 mm ou plus et de 3,5 mm ou moins.

3. Bandage pneumatique (10) selon la revendication 1 ou 2, dans lequel un angle d'inclinaison du cordon incliné (51) par rapport à la direction de la largeur du bandage pneumatique est de 35 degrés ou plus et de 55 degrés ou moins, de préférence de 40 degrés ou plus et de 50 degrés ou moins.

4. Bandage pneumatique (10) selon l'une quelconque des revendications 1 à 3, dans lequel une épaisseur maximale du caoutchouc constituant la partie latérale de bandage pneumatique (30) est de 3 mm ou moins, et
une épaisseur maximale du caoutchouc constituant la partie de bourrelet (60) est de 13 mm ou moins.

5. Bandage pneumatique (10) selon l'une quelconque des revendications précédentes, dans lequel le tan δ à 30 °C du caoutchouc formant la bande de roulement (20) est de 0,08 ou plus et de 0,2 ou moins.
